# EUROPÄISCHE PATENTSCHRIFT

(11) **EP 0 424 568 B1**
(45) Veröffentlichungstag und Bekanntmachung des Hinweises auf die Patenterteilung: **05.01.1994**
(21) Anmeldenummer: 89119921.8
(22) Anmeldetag: 26.10.1989
(51) Int. Cl.: G21C 9/004

(54) **Verfahren und Vorrichtung zum Druckabbau in einem Druckbehälter**
Method and apparatus for pressure reduction in a pressure vessel
Procédé et dispositif pour la réduction de pression dans une cuve de pression

(43) Veröffentlichungstag der Anmeldung: 02.05.1991
(73) Patentinhaber: SIEMENS AKTIENGESELLSCHAFT, 80333 München (DE)
(72) Erfinder: Butkereit, Werner, Dipl.-Ing., D-8521 Weisendorf (DE); Stockhausen, Horst Dieter, Dipl.-Ing., D-8500 Nürnberg (DE)

(56) Entgegenhaltungen:
- EP-A- 0 039 826
- FR-A- 2 431 164
- US-A- 4 863 677

## Beschreibung

Die Erfindung betrifft ein Verfahren zum Druckabbau in einem Druckbehälter, insbesondere in einem Druckhalter eines Druckwasserreaktors, wobei nicht kondensierbares Gas, Dampf oder Wasser über eine aufsteigende Leitung und eine Armatur aus dem Druckbehälter abgelassen wird. Die Erfindung betrifft auch eine Vorrichtung zur Durchführung dieses Verfahrens.

Zum Abbau eines Überdruckes in einem Druckhalter geht von dessen oberen Teil mindestens eine aufsteigende Leitung aus, die mit einer Armatur verbunden ist. In einer solchen aufsteigenden Leitung kann ein Sicherheitsventil vorhanden sein, das im Regelfall geschlossen ist und bei Erreichen eines kritischen Überdruckes im Druckhalter öffnet. Neben einem Sicherheitsventil kann auch ein sogenanntes Steuerventil vorhanden sein, mit dem das Sicherheitsventil steuerbar ist. Im Regelfall, das heißt, wenn ein Druckabbau nicht erforderlich ist, ist die Armatur geschlossen. In der aufsteigenden Leitung, die durch die Armatur verschlossen ist, befindet sich dann ein aus dem Druckhalter stammendes Medium. Die aufsteigende Leitung kann bis hin zur verschlossenen Armatur mit nicht kondensierbaren Gasen, deren größter Bestandteil Wassersoff ist, gefüllt sein. Die Wasserstoffanreicherung erfolgt durch vorhandene Wärmeverluste an der Leitung und aufgrund der unterschiedlichen Löslichkeit von Wasserstoff in Dampf und Kondensat.

Das zum Zeitpunkt des Öffnens der Armatur in der aufsteigenden Leitung vor der Armatur stehende nicht kondensierbare Gas, meist Wasserstoff, strömt beim Öffnen der Armatur sehr schnell ab. Die Strömungsgeschwindigkeit des Gases kann in der ersten Phase des Abströmens die Schallgeschwindigkeit in Wasserstoff erreichen. Diese hohe Strömungsgeschwindigkeit führt zu Instabilitäten im Steuerventil, insbesondere an dessen Impulsteil.

Bei geschlossener Armatur hat die aufsteigende Leitung zwischen Druckhalter und Armatur mit dem in ihr stehenden Medium weitgehend Umgebungstemperatur. Das Medium ist dabei ein nicht kondensierbares Gas. Die aufsteigende Leitung ist also relativ zum Inneren des Druckhalters sehr kühl.

Wenn bei Bedarf dann die Armatur öffnet, strömt bald heißer Dampf aus dem Druckhalter durch die aufsteigende Leitung in die Armatur. Dadurch kommt es dort zu einer plötzlichen Erwärmung. Dieser Temperaturschock kann Materialschäden an der Leitung und an der Armatur hervorrufen.

Der Erfindung liegt die Aufgabe zugrunde, ein Verfahren zum Druckabbau in einem Druckbehälter anzugeben, mit dem verhindert wird, daß die Armatur von einem Medium beaufschlagt wird, das Instabilitäten an der Armatur verursacht. Auch soll an der Armatur ein Temperaturschock nicht auftreten können.

Außerdem soll eine Vorrichtung zur Durchführung des Verfahrens zum Druckabbau in einem Druckbehälter angegeben werden.

Die erstgenannte Aufgabe wird gemäß der Erfindung dadurch gelöst, daß aus der aufsteigenden Leitung ständig, auch bei geschlossener Armatur, das nicht kondensierbare Gas abgezogen wird.

Damit wird der Vorteil erzielt, daß die Armatur stets, auch unmittelbar nach dem Öffnen, funktionstüchtig ist. Ein weiterer Vorteil ist, daß die Temperatur der aufsteigenden Leitung, der Temperatur im Inneren des Druckbehälters entspricht. Wenn die Armatur öffnet, steht also sofort ein Medium an, das frei ist von nicht kondensierbarem Gas, wie Wasserstoff, und das die selbe Temperatur hat wie das später nachströmende Medium, das aus dem Inneren des Druckbehälters stammt. Damit sind eine Instabilität durch mit hoher Geschwindigkeit abströmendes Gas und ein Temperaturschock ausgeschlossen, die zu Beschädigungen der Armatur führen könnten. Die Lebensdauer und die Zuverlässigkeit der Armatur wird deutlich erhöht.

Beispielsweise wird die aufsteigende Leitung ständig von einem heißen Medium aus dem Druckbehälter durchströmt, das in den Druckbehälter zurückgeführt wird.

Es wird damit der Vorteil erzielt, daß bedingt durch den Kreislauf des Mediums in der aufsteigenden Leitung abgeschiedenes, nicht kondensierbares Gas, hauptsächlich Wasserstoff, sofort wieder in den Druckbehälter zurückgeführt wird. Dadurch kommt es nicht zu einer Wasserstoffansammlung oder einer Ansammlung anderer Gase an der geschlossenen Armatur und auch nicht zu einem plötzlichen Abströmen von Wasserstoff oder anderer Gase beim Öffnen der Armatur. Beschädigungen durch Instabilitäten der Armatur infolge eines mit hoher Geschwindigkeit strömenden Gases sind ausgeschlossen.

Da im Druckbehälter stets ein heißes Medium vorhanden ist, ist durch einen derartigen Kreislauf auch eine permanente Erwärmung der aufsteigenden Leitung bis hin zur Armatur gewährleistet. Ein Temperaturunterschied zwischen dem Inneren des Druckbehälters und der aufsteigenden Leitung ist dann nicht mehr vorhanden. Es kann dann auch nicht zu einem Temperaturschock in der Armatur kommen.

Beispielsweise wird das Medium druckbehälterseitig unmittelbar vor der Armatur über eine dort abzweigende Saugleitung angesaugt, die mit dem Druckbehälter in Verbindung steht. Damit ist gewährleistet, daß die aufsteigende Leitung bis unmittelbar vor die Armatur ständig durchströmt wird. Unterhalb der geschlossenen Armatur kann sich kein nicht kondensierbares Gas ansammeln. Außerdem wird die gesamte aufsteigende Leitung dadurch gleichmäßig erwärmt.

Beispielsweise wird das Medium über die abzweigende Saugleitung mit einer Pumpe abgesaugt und dann in den Druckbehälter zurückgeführt.

Diese Pumpe ist beispielsweise eine Wasserstrahlpumpe. Durch die verengte Hauptbohrung der Wasserstrahlpumpe hindurch wird über eine Zuführleitung in den Druckbehälter Wasser oder eine andere Flüssigkeit eingespeist. Die Saugleitung endet am verengten Teil der Wasserstrahlpumpe. Auf diese Weise wird das Medium unmittelbar vor der geschlossenen Armatur über die Saugleitung abgesaugt und gelangt zusammen mit der einzuspeisenden Flüssigkeit über eine Zuführleitung in den Druckbehälter zuruck. Es ist ein Kreislauf gegeben vom Druckbehälter über die aufsteigende Leitung, die Saugleitung, die Wasserstrahlpumpe und die Zuführleitung zurück zum Druckbehälter.

Mit dem Einsatz der Wasserstrahlpumpe wird der Vorteil erzielt, daß das Medium ohne externe Energie, die eine Elektropumpe benötigen würde, zu bewegen ist.

Durch die Wasserstrahlpumpe strömt beispielsweise Wasser, das über ein Sprühsystem in den Druckbehälter gelangt. Das Sprühsystem ist für eine Dauersprühung ständig in Betrieb. Dadurch ist die Wasserstrahlpumpe ständig einsatzbereit. Gas, wie Wasserstoff, wird sofort aus der aufsteigenden Leitung abgesaugt. Durch den ständigen Umlauf des Mediums wird die aufsteigende Leitung erwärmt.

Mit dem Verfahren nach der Erfindung wird der Vorteil erzielt, daß die Armatur funktionssicher arbeitet, da sich kein nicht kondensierbares Gas ansammelt, und da Temperaturschocks in der Armatur vermieden werden.

Die Aufgabe, eine geeingnete Vorrichtung zur Durchführung des geschilderten Verfahrens zum Druckabbau in einem Druckbehälter anzugeben, der über eine aufsteigende Leitung mit einer Armatur zum Ablassen von nicht kondensierbarem Gas, Dampf oder Wasser verbunden ist, wird gemäß der Erfindung dadurch gelöst, daß von der aufsteigenden Leitung druckbehälterseitig unmittelbar vor der Armatur eine Saugleitung abzweigt, die ständig, auch bei geschlossener Armatur, über eine Pumpe in einem Kreislauf mit dem Druckbehälter in Verbindung steht. Dadurch ist ein Kreislauf gegeben, in den die gesamte aufsteigende Leitung bis unmittelbar vor die Armatur eingebunden ist. Durch diesen Mediumkreislauf bedingt, können sich unterhalb der geschlossenen Armatur keine Gasblasen ausbilden, da solches Gas zusammen mit dem Medium über den Kreislauf sofort in den Druckbehälter zurückgeleitet wird. Außerdem ist die Temperatur in der aufsteigenden Leitung weitgehend identisch mit der Temperatur im Druckbehälter. Die aufsteigende Leitung wird also ständig erwärmt.

Die Pumpe kann eine Wasserstrahlpumpe sein. Dabei ist die Saugleitung mit einem seitlichen Saugeingang der Wasserstrahlpumpe verbunden. Die Wasserstrahlpumpe ist in einer Einspeiseleitung eingeordnet, die mit dem Druckbehälter verbunden ist. Durch diese Einspeiseleitung wird dem Druckbehälter Wasser zugeleitet.

Gemäß der als solchen bekannten Arbeitsweise einer Wasserstrahlpumpe wird das über die Saugleitung herangeführte Medium in die in der Einspeiseleitung strömende Flüssigkeit hineingemischt und mit dieser in den Druckbehälter gebracht. Man kommt vorteilhaft ohne zusätzliche externe Energie für eine Pumpe aus.

Beispielsweise ist die Einspeiseleitung Teil einer Sprüheinrichtung, die ständig in Betrieb ist, solange die gesamte Anlage arbeitsbereit ist. Dadurch ist gewährleistet, daß auch die Wasserstrahlpumpe ständig in Betrieb ist.

Die Wasserstrahlpumpe kann beispielsweise in einem Bypaß parallel zu einem in der Einspeiseleitung der Sprüheinrichtung eingefügten Sprühventil angeordnet sein. Durch die Wasserstrahlpumpe strömt dann das ständig in den Druckbehälter einzusprühende Volumen. Nur bei Bedarf wird ein zusätzliches Volumen über das Sprühventil in den Druckbehälter eingesprüht.

Die Wasserstrahlpumpe kann auch Bestandteil des Sprühventils selbst sein, das sich in der Einspeiseleitung der Sprüheinrichtung befindet. Die Querschnittsverengung mit nachfolgender Aufweitung in der Wasserstrahlpumpe ist geeignet, die sie durchströmende Flüssigkeit zu versprühen.

Die Vorrichtung zur Durchführung des Verfahrens nach der Erfindung ist geeignet, Beschädigungen in einer Armatur, die dem Druckabbau dient, zu verhindern. Es tritt beim Öffnen der Armatur kein Temperaturschock auf. Es kommt auch nicht zu Instabilitäten der Armatur beim Abströmen eines Gasvolumens aus nicht kondensierbarem Gas mit hoher Geschwindigkeit. Beides, Abströmen des Gasvolumens mit hoher Geschwindigkeit und Temperaturschock, könnten die Armatur beschädigen, da die Armatur in kurzen Abständen mehrmals geöffnet und geschlossen wird.

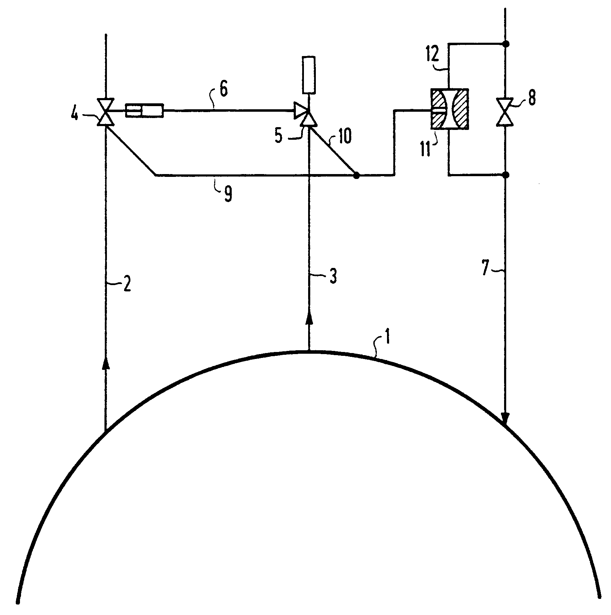

Das Verfahren und die Vorrichtung nach der Erfindung werden anhand der Zeichnung näher erläutert:
Die Zeichnung zeigt einen Teil eines Druckbehälters mit Einrichtungen zum Druckabbau und zum Einspeisen einer Flüssigkeit, der gemäß der Erfindung ausgestattet ist.

Von einem Druckbehälter 1, der nur teilweise dargestellt ist, gehen im oberen Bereich zwei aufsteigende Leitungen 2 und 3 aus. Die erste aufsteigende Leitung 2 ist mit einer ersten Armatur 4, die ein Sicherheitsventil ist, verbunden. Falls der Druck im Druckbehälter 1 einen Schwellenwert übersteigt, öffnet die erste Armatur 4. Dann wird das im Druckbehälter 1 befindliche Medium so lange abgelassen, bis der Schwellenwert für den Druck wieder unterschritten ist.

Ein Überdruck im Druckbehälter 1 wird damit abgebaut. Die zweite aufsteigende Leitung 3 ist mit einer zweiten Armatur 5, die ein Vorsteuerventil ist, verbunden. Die zweite Armatur 5 (Vorsteuerventil) ist über eine Verbindung 6 mit der ersten Armatur 4 (Sicherheitsventil) gekoppelt. Mit der zweiten Armatur 5 wird die erste Armatur 4 gesteuert. Beide Armaturen 4 und 5 bilden eine Einheit. Zum ständigen Einspeisen von Wasser in den Druckbehälter 1 ist diesem eine Einspeiseleitung 7 zugeordnet. In der Einspeiseleitung 7 befindet sich ein Sprühventil 8.

Bei geschlossenen Armaturen 4 und 5 sind die aufsteigenden Leitungen 2 und 3 mit dem Medium des Druckbehälters 1 angefüllt. Dabei kann, unmittelbar unterhalb der geschlossenen Armaturen 4 und 5 Wasserstoff angesammelt sein. Die aufsteigenden Leitungen 2 und 3 nehmen bei Wasserstoffansammlung zusammen mit ihrem Inhalt schnell Umgebungstemperatur an. Die Umgebungstemperatur außerhalb des Druckbehälters 1 ist aber deutlich kleiner als die Temperatur des Mediums im Druckbehälter 1. Bei einem Überdruck im Druckbehälter 1 öffnen die Armaturen 4 und 5 selbsttätig. Zunächst strömt dann relativ kühles Medium aus den aufsteigenden Leitungen 2 und 3 in die Armaturen 4 und 5 ein. Bald darauf folgt aber das relativ heiße Medium aus dem Druckbehälter 1 nach. Die Armaturen 4 und 5 werden von einer heißen Dampffront getroffen, die in der Struktur der Armaturen 4 und 5 und der Leitungen 2 und 3 einen Temperaturschock auslöst, der zu Beschädigungen an den Armaturen 4 und 5 und Leitungen 2 und 3 führen kann.

Wenn sich bei geschlossenen Armaturen 4 und 5 in den aufsteigenden Leitungen 2 und 3 eine Wasserstoffblase ausgebildet hat, kommt es beim Öffnen der Armaturen 4 und 5 durch das schnelle Abströmen des Gases zu Funktionsstörungen an den Armaturen 4 und 5. Durch diese Funktionsstörungen sind Beschädigungen an den Armaturen 4 und 5 möglich. Der Wasserstoff kann mit anderen nicht kondensierbaren Gasen vermischt sein.

Von der ersten aufsteigenden Leitung 2 zweigt druckbehälterseitig unmittelbar vor der ersten Armatur 4 eine erste Saugleitung 9 ab. Entsprechend zweigt druckbehälterseitig unmittelbar vor der zweiten Armatur 5 von der zweiten aufsteigenden Leitung 3 eine zweite Saugleitung 10 ab. Die zweite Saugleitung 10 ist mit der ersten Saugleitung 9 verbunden. Diese ist an der Saugöffnung einer Pumpe angeschlossen. Die Pumpe ist eine Wasserstrahlpumpe 11, deren Hauptdurchflußkanal sich in einem Bypaß 12 des Sprühventiles 8 befindet, das Teil der Einspeiseleitung 7 ist. Am seitlichen Ansaugstutzen der Wasserstrahlpumpe 11 ist die mit der zweiten Saugleitung 10 gekoppelte erste Saugleitung 9 angeschlossen.

Da die Einspeiseleitung 7 und damit auch der Bypaß 12 ständig von Wasser durchströmt wird, ist auch die Wasserstrahlpumpe 11 ständig aktiv. Sie saugt über die Saugleitungen 9 und 10 das Medium aus den aufsteigenden Leitungen 2 und 3 ab. Dorthin strömt neues Medium aus dem Inneren des Druckbehälters 1 nach. Das von der Wasserstrahlpumpe 11 abgesaugte Medium gelangt zusammen mit dem einzuspeisenden Wasser über die Einspeiseleitung 7 in den Druckbehälter 1 zuruck. Es ist also ein Kreislauf gegeben vom Druckbehälter 1 über die aufsteigenden Leitungen 2 und 3, die Saugleitungen 9 und 10, die Wasserstrahlpumpe 11, den Bypaß 12 und die Einspeiseleitung 7 zurück zum Druckbehälter 1. Bedingt durch diesen Kreislauf strömt ständig heißes Medium aus dem Druckbehälter 1 durch die aufsteigenden Leitungen 2 und 3 und erwärmt diese. Es kann also nicht zu einem Temperaturschock beim Öffnen der Armaturen 4 und 5 kommen. Es kann sich auch keine Wasserstoffblase unter einer geschlossenen Armatur 4 oder 5 ausbilden, die beim Öffnen der Armatur 4 oder 5 durch das schnelle Ausströmen des Wasserstoffs zu Instabilitäten führen und dadurch Beschädigungen an der Armatur 4 oder 5 verursachen könnte. Falls sich in den aufsteigenden Leitungen 2 oder 3 Wasserstoffgas angesammelt hat, wird dieses zusammen mit dem übrigen Medium durch die Wasserstrahlpumpe 11 über die Saugleitungen 9 und 10 abgesaugt und dann über den Bypaß 12 und die Einspeiseleitung 7 in den Druckbehälter 1 zurückbefördert.

Mit der gezeigten Vorrichtung werden Beschädigungen der Armaturen 4 und 5 und der Leitungen 2 und 3 verhindert, die auf Temperaturschocks oder auf Instabilitäten der Armaturen 4 oder 5 infolge von mit hoher Geschwindigkeit abströmendem Gas zurückzuführen sind.

Es kann auch z. B. nur eine aufsteigende Leitung 2 mit einer Armatur 4 und einer Saugleitung 9 vorhanden sein, die mit der Wasserstrahlpumpe 11 verbunden ist. Die Wasserstrahlpumpe 11 kann statt in einem Bypaß 12 auch direkt in dem Sprühventil 8 in der Einspeiseleitung 7 angeordnet sein.

## Patentansprüche

1. Verfahren zum Druckabbau in einem Druckbehälter (1), insbesondere in einem Druckhalter eines Druckwasserreaktors, wobei nicht kondensierbares Gas, Dampf oder Wasser über eine aufsteigende Leitung (2, 3) und eine Armatur (4, 5) aus dem Druckbehälter (1) abgelassen wird, **dadurch gekennzeichnet,** daß aus der aufsteigende Leitung (2, 3) ständig, auch bei geschlossener Armatur (4, 5), das nicht kondensierbare Gas abgezogen wird.

2. Verfahren nach Anspruch 1, **dadurch gekennzeichnet,** daß die aufsteigende Leitung (2, 3) ständig von einem heißen Medium aus dem Druckbehälter (1) durchströmt wird, das in den Druckbehälter (1) zurückgeführt wird.

3. Verfahren nach Anspruch 2, **dadurch gekennzeichnet,** daß das Medium druckbehälterseitig unmittelbar vor der Armatur (4, 5) über eine dort abzweigende Saugleitung (9, 10) angesaugt wird, die mit dem Druckbehälter (1) in Verbindung steht.

4. Verfahren nach Anspruch 3, **dadurch gekennzeichnet,** daß das Medium über die abzweigende Saugleitung (9, 10) mit einer Pumpe abgesaugt wird.

5. Verfahren nach Anspruch 4, **dadurch gekennzeichnet,** daß das Medium mit einer Wasserstrahlpumpe (11) abgesaugt wird, durch die Wasser, das in den Druckbehälter (1) eingespeist wird, strömt, und daß das Medium zusammen mit dem Wasser in den Druckbehälter (1) gelangt.

6. Verfahren nach Anspruch 5, **dadurch gekennzeichnet,** daß durch die Wasserstrahlpumpe (11) Wasser strömt, das über ein Sprühsystem in den Druckbehälter (1) gelangt, das für eine Dauersprühung ständig in Betrieb ist.

7. Vorrichtung zur Durchführung des Verfahrens zum Druckabbau in einem Druckbehälter (1) nach einem der Ansprüche 1 bis 6, wobei der Druckbehälter (1) über eine aufsteigende Leitung (2, 3) mit einer Armatur (4, 5) zum Ablassen von nicht kondensierbarem Gas, Dampf oder Wasser verbunden ist, **dadurch gekennzeichnet,** daß von der aufsteigenden Leitung (2, 3) druckbehälterseitig unmittelbar vor der Armatur (4, 5) eine Saugleitung (9, 10) abzweigt, die ständig, auch bei geschlossener Armatur (4, 5), über eine Pumpe in einem Kreislauf mit dem Druckbehälter (1) in Verbindung steht.

8. Vorrichtung nach Anspruch 7, **dadurch gekennzeichnet,** daß die Saugleitung (9, 10) mit einer Wasserstrahlpumpe (11) verbunden ist, die in einer mit dem Druckbehälter (1) verbundenen Einspeiseleitung (7), durch die eine Flüssigkeit, insbesondere Wasser, in den Druckbehälter (1) gelangt, angeordnet ist.

9. Vorrichtung nach Anspruch 8, **dadurch gekennzeichnet,** daß die Einspeiseleitung (7) Teil einer Sprüheinrichtung ist, die für einen ständigen Betrieb ausgelegt ist.

10. Vorrichtung nach den Ansprüchen 8 und 9, **dadurch gekennzeichnet,** daß die Wasserstrahlpumpe (11) in einen Bypaß (12) parallel zu einem in der Einspeiseleitung (7) der Sprüheinrichtung eingefügten Sprühventil (8) angeordnet ist.

11. Vorrichtung nach den Ansprüchen 8 und 9, **dadurch gekennzeichnet,** daß die Wasserstrahlpumpe (11) ein Teil eines Sprühventils (8) in der Sprüheinrichtung ist.

## Claims

1. Method for reducing pressure in a pressure vessel (1), in particular in a pressurizer of a pressurized water reactor, by which non-condensable gas steam or water is let off out of the pressure vessel (1) by way of a rising line (2, 3) and a fitting (4, 5), characterised in that the non-condensable gas is drawn off from the rising line (2, 3) constantly, even when the fitting (4, 5) is closed.

2. Method according to claim 1, characterised in that a hot medium from the pressure vessel (1) constantly flows through the rising line (2, 3), which medium is returned to the pressure vessel (1).

3. Method according to claim 2, characterised in that the medium is drawn in by suction on the pressure vessel side directly in front of the fitting (4, 5) by way of a suction line (9, 10) which branches off there and which communicates with the pressure vessel (1).

4. Method according to claim 3, characterised in that the medium is drawn off by suction with a pump by way of the suction line (9, 10) which branches off.

5. Method according to claim 4, characterised in that the medium is drawn off by suction with a water jet pump (11), through which water, which is fed into the pressure vessel (1), flows, and in that the medium together with the water reaches the pressure vessel (1).

6. Method according to claim 5, characterised in that water flows through the water jet pump (11) and reaches the pressure vessel (1) by way of a spraying system which is constantly in operation for continuous spraying.

7. Arrangement for carrying out the method for reducing pressure in a pressure vessel (1) according to one of the claims 1 to 6, in which case the pressure vessel (1) is connected, by way of a rising line (2, 3), with a fitting (4, 5) to let off non-condensable gas, steam or water, characterised in that there branches off from the rising line (2, 3) on the pressure vessel side directly in front of the fitting (4, 5) a suction line (9, 10) which constantly communicates with the pressure vessel (1), even when the fitting (4, 5) is closed, by way of a pump in a circuit.

8. Arrangement according to claim 7, characterised in that the suction line (9, 10) is connected with a water jet pump (11) arranged in a feed line (7) which is connected with the pressure vessel (1) and through which a fluid, in particular water, reaches the pressure vessel (1).

9. Arrangement according to claim 8, characterised in that the feed line (7) is part of a spraying device which is designed for continuous operation.

10. Arrangement according to claims 8 and 9, characterised in that the water jet pump (11) is arranged in a by-pass (12) parallel to a spray valve (8) inserted in the feed line (7) of the spraying device.

11. Arrangement according to claims 8 and 9, characterised in that the water jet pump (11) is part of a spray valve (8) in the spraying device.

## Revendications

1. Procédé de suppression de la pression dans une cuve sous pression (1), notamment dans un dispositif de maintien de la pression d'un réacteur à eau sous pression, dans lequel du gaz non condensable, de la vapeur ou de l'eau est évacué de la cuve sous pression (1) par une conduite ascendante (2,3) et par un robinet (4,5) caractérisé en ce que le gaz non condensable est soutiré constamment de la conduite ascendante (2,3), même lorsque le robinet (4,5) est fermé.

2. Procédé suivant la revendication 1, caractérisé en ce que la conduite ascendante (2,3) est parcourue constamment par un milieu chaud venant de la cuve sous pression (1) et ramenée à la cuve sous pression (1).

3. Procédé suivant la revendication 2, caractérisé en ce que le milieu est aspiré, du côté de la cuve sous pression, juste avant le robinet (4,5) dans une conduite d'aspiration (9,10) en dérivation qui communique avec la cuve sous pression (1).

4. Procédé suivant la revendication 3, caractérisé en ce que le milieu est aspiré dans la conduite d'aspiration (9,10) en dérivation par une pompe.

5. Procédé suivant la revendication 4, caractérisé en ce que le milieu est aspiré par un éjecteur à eau (11) dans lequel passe l'eau qui est envoyée à la cuve sous pression (1) et le milieu arrive avec l'eau dans la cuve sous pression (1).

6. Procédé suivant la revendication 5, caractérisé en ce que dans l'éjecteur à eau (11) passe de l'eau qui arrive à la cuve sous pression par un système de projection, lequel est toujours en service pour une projection permanente.

7. Dispositif pour la mise en oeuvre du procédé de suppression de la pression dans une cuve sous pression (1) suivant l'une des revendications 1 à 6, dans lequel la cuve sous pression (1) communique par une conduite ascendante (2,3) avec un robinet (4,5) pour l'évacuation de gaz non condensable, de vapeur ou d'eau, caractérisé en ce que de la conduite ascendante (2,3) part, du côté de la cuve sous pression juste avant le robinet (4,5), une conduite d'aspiration (9,10) qui communique constamment avec la cuve sous pression (1), en circuit fermé, par une pompe de circulation, même lorsque le robinet (4,5) est fermé.

8. Dispositif suivant la revendication 7, caractérisé en ce que la conduite d'aspiration (9,10) communique avec un éjecteur à eau (11) qui est disposé dans une conduite d'alimentation (7) qui communique avec la cuve sous pression (1) et par laquelle un liquide, notamment de l'eau, arrive dans la cuve sous pression (1).

9. Dispositif suivant la revendication 8, caractérisé en ce que la conduite d'alimentation (7) fait partie d'une installation de projection qui est conçue pour un fonctionnement permanent.

10. Dispositif suivant les revendications 8 et 9, caractérisé en ce que l'éjecteur à eau (11) est monté dans une dérivation (12) en parallèle avec une vanne de projection (8) insérée dans la conduite d' alimentation (7) du dispositif de projection.

11. Dispositif suivant les revendications 8 et 9, caractérisé en ce que l'éjecteur à eau (11) fait partie d'une vanne de projection (8) de l'installation de projection.
